Europäisches Patentamt

European Patent Office

Office européen des brevets

(19)

(11) **EP 1 224 605 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(21) Anmeldenummer: **00967572.9**

(22) Anmeldetag: **14.09.2000**

(51) Int Cl.$^7$: **G06K 1/12**, B41M 5/26

(86) Internationale Anmeldenummer:
**PCT/DE00/03187**

(87) Internationale Veröffentlichungsnummer:
**WO 01/027862 (19.04.2001 Gazette 2001/16)**

(54) **VERFAHREN ZUR ERZEUGUNG VON MIKROSCHRIFT AUF DATENTRÄGERN, INSBESONDERE KUNSTSTOFFKARTEN**

METHOD FOR PRODUCING MICROWRITING ON DATA CARRIERS, ESPECIALLY PLASTIC CARDS

PROCEDE DE REALISATION D'UNE MICRO-INSCRIPTION SUR DES SUPPORTS DE DONNEES, EN PARTICULIER SUR DES CARTES EN MATIERE PLASTIQUE

(84) Benannte Vertragsstaaten:
**AT BE CH CY DE DK ES FI FR GB GR IE IT LI LU MC NL PT SE**

(30) Priorität: **14.10.1999 DE 19949542**

(43) Veröffentlichungstag der Anmeldung:
**24.07.2002 Patentblatt 2002/30**

(73) Patentinhaber: **Orga Kartensysteme GmbH**
**33104 Paderborn (DE)**

(72) Erfinder:
- **FISCHER, Dirk**
  **33106 Paderborn (DE)**
- **FANNASCH, Lothar**
  **33647 Bielefeld (DE)**
- **MIGGE, Andreas Orga Kartensysteme GmbH**
  **33104 Paderborn (DE)**
- **HENNEMEYER-SCHWENKER, Michael**
  **33165 Herbram (DE)**

(56) Entgegenhaltungen:
WO-A-97/18092          DE-A- 4 429 110

**Beschreibung**

Die Erfindung bezieht sich auf ein Verfahren zur Erzeugung von Mikroschrift auf Datenträger, insbesondere Kunststoffkarten.

Als Mikroschriften werden Schriften mit einer maximalen Höhe einzelner Schriftzeichen von ca. 240µm bezeichnet. Mikroschrift ist so klein, daß sie mit bloßem Auge nicht zu entziffern ist. Zum Entziffern der Mikroschrift ist zumindest eine Lupe oder ein Mikroskop erforderlich. Es sind bereits Kreditkarten bekannt, die Mikroschrift als Sicherheitsmerkmal aufweisen. Dabei wird die Mikroschrift im Offsetdruckverfahren auf die Kartenoberfläche aufgebracht, wobei auf alle Karten die gleiche Mikrobeschriftung aufgebracht wird.

Hierbei gibt es jedoch zwei Nachteile. Der erste Nachteil ist, daß die im Offsetdruck erzielbare Auflösung schlecht ist. Dies liegt daran, daß sich im Offsetdruck keine oder nur sehr aufwendig Linienstärken oder Punkte mit einem Durchmesser kleiner als 50µm erzeugen lassen. Bei einer Schrifthöhe von nur 240µm stehen dann nur 4 oder 5 Punkte zur Darstellung des Zeichens zur Verfügung - dementsprechend gering ist dann auch die Auflösung. Der zweite Nachteil ist, daß im Offsetdruck nicht kartenindividuelle (z.B. Kartennummer, Name des Karteninhabers etc.) Daten in Form von Mikroschrift aufgebracht werden können, da es unwirtschaftlich ist, für jede Karte eigens eine Druckvorlage herzustellen und in die Druckmaschine einzubauen.

Ein alternatives Beschriftungsverfahren auf Kunststoffkarten ist z.B. die Laserbeschriftung (siehe z. B. DE 31 51 407 C1). Die Beschriftung wird dabei in Form von Änderungen der optischen Eigenschaften des Kunststoffmaterials aufgrund irreversibler, durch den Laserstrahl bewirkter Materialveränderungen (z.B. Carbonisierung) sichtbar.

Gemäß DE 31 51 407 C1 wird die Laserstrahlung eines Nd-YAG-Lasers verwendet, der eine Wellenlänge von 1064nm emittiert.

Aus der DE 33 14 327 C1 ist es bereits bekannt, auch Mikroschrift mittels Laserstrahlung auf Kunststoffkarten aufzubringen. Die Verwendung eines Lasers zur Erzeugung von Mikroschrift hat den Vorteil, daß bei Verwendung einer Zweikoordinaten-Strahlablenkvorrichtung auch kartenindividuelle Daten aufgebracht werden können.

Aus der DE 44 29 110 C2 ist eine Laserbeschriftungsanlagen für Ausweiskarten bekannt, bei der ebenfalls ein Nd-YAG-Laser mit einer Wellenlänge von 1064 nm eingesetzt wird. Dort wird der Laserstrahl über ein sogenanntes Planfeldobjektiv auf die zu beschriftende Fläche fokussiert. Um die Laserbeschriftung im Vektor- oder Rasterverfahren durchführen zu können, wird der Laserstrahl über eine Zweikoordinaten-Ablenkvorrichtung in x,y-Richtung der zu beschriftenden Fläche abgelenkt. Die Zweikoordinaten-Ablenkvorrichtung besteht aus zwei Ablenkspiegeln, die jeweils über einen Galvanometer-Schwenkmotor verschwenkbar sind.

Der Strahldurchmesser des aus dem Laser ausgekoppelten Strahls beträgt ca. 0,9mm. Damit die Strahlintensität pro Fläche auf den Ablenkspiegeln nicht zu groß ist, wird der Strahl zuvor auf ca. 3 bis 5 mm aufgeweitet. Dadurch wird eine Zerstörung der Spiegel verhindert. Die Zweikoordinaten-Ablenkvorrichtung ist möglichst nah an dem Planfeldobjektiv angeordnet, damit auch bei stark verschwenktem Spiegel zur Beschriftung der Kartenrandbereiche der Laserstrahl in der Nähe der optischen Achse des Planfeldobjektivs verläuft. Die Schwenkwinkelbereiche der Galvanometer-Schwenkmotoren sind ebenfalls begrenzt (typischer Wert: $\pm 10^0$ bzw. für den optisch abgelenkten Strahl $\pm 20^0$). Dies begrenzt nun wieder die Brennweite des eingesetzten Planfeldobjektivs nach unten. Damit z.B. der gesamte Bereich einer Karte im ISO-Format (Länge = 85 mm; Breite = 55 mm) beschriftet werden kann, ist ein Planfeldobjektiv mit einer Brennweite von mindestens 110 mm notwendig. Die Brennweiten der eingesetzten Planfeldobjektive liegen zwischen 100 und 160 mm. Die Versuche, Laser-Mikroschrift mit einer solchen Anlage zu erzeugen, waren jedoch unbefriedigend, da nur eine geringe Auflösung der Laser-Mikroschrift erzielt werden konnte. Es war nicht möglich einzelne Mikroschriftpunkte oder Linien mit einem Durchmesser kleiner als 50µm zu erzielen.

Aufgabe der Erfindung ist es, ein Verfahren zur Erzeugung einer hochaufgelösten Laser-Mikroschrift auf Datenträger, insbesondere auf Kunststoffkarten, zu schaffen.

Diese Aufgabe wird durch die Merkmale von Patentanspruch 1 gelöst. Die sich daran anschließenden Unteransprüche stellen vorteilhafte Ausführungsformen der Erfindung dar.

Auf der Suche nach einem verbesserten Laser-Mikroschrift-Verfahren hat es sich im Rahmen von Versuchen herausgestellt, daß eine besonders hochaufgelöste-Mikroschrift erzielbar ist, bei Verwendung einer Laserwellenlänge kleiner als 1064 nm, die bisher üblich war Außerdem erwies es sich als besonders vorteilhaft, den Laserstrahl vor der Fokussierung stärker als 5 mm weiter aufzuweiten - also bewußt über das Maß hinaus, das notwendig ist, um eine Zerstörung der Ablenkspiegel zu verhindem. Besonders gute Beschriftungsergebnisse wurden außerdem mit Laserstrahlen erreicht, die zudem ein Gaußförmiges-Strahlprofil aufwiesen.

Als besonders vorteilhaft für die Auflösung der Mikroschrift hat sich die Verwendung eines nahezu Gaußförmigen Strahlprofils herausgestellt, wenn zusätzlich für den Datenträger ein Material verwendet wird, das erst ab einem bestimmten Schwellwert (IS) der Laserintensität durch eine Materialänderung eine Änderung der optischen Eigenschaft erfährt, wobei dieser Schwellwert größer sein soll als die Intensität ($I_{MAX}/e^2$) des Laserstrahls bezogen auf das Gaußförmige Strahlprofil des auf den Datenträger fokussierten Laserstrahls (21). Damit bewirkt nur der innere Bereich des Gaußförmigen Strahlprofils des fokussierten Laserstrahls eine Beschriftung, wodurch eine zusätzliche Reduzierung der Größe der Mikroschriftpunkte erzielt wird. Der Durchmesser der Laser-Miroschriftpunkte entspricht dann dem Durchmesser der Intensitätsverteilung im Fokus, die über der Materialveränderungsschwelle liegt. Durch eine geeignete Wahl der Laserintensität kann die Breite der Mikroschriftpunkte in einem gewissen Bereich von nahezu 0 bis zur sogenannten $1/e^2$-Breite des fokussierten Laserstrahls variiert werden.

Die besonders guten Mikrobeschriftungsergebnisse bei den erfindungsgemäßen Bedingungen können erklärt werden, wenn man berücksichtigt, daß der Durchmesser (D) des vom Planfeldobjektiv fokussierten Laserstrahls nicht beliebig klein ist, sondern folgender Gesetzmäßigkeit unterliegt:

$$D = (C * \lambda * f)/D_2$$

Dabei bezeichnet:

$\lambda$ die Wellenlänge des zur Mikrobeschriftung verwendeten Laserstrahls,
$f$ die Brennweite des Planfeldobjektivs,
$D_2$ den Strahldurchmesser des aufgeweiteten Laserstrahls vor der Fokussierung,
C eine Konstante.

Hier erkennt man, daß die Verwendung eines Laserstrahls mit einer Wellenlänge kleiner als 1064 nm und eine Strahlaufweitung vor der Fokussierung größer als 5 mm einen Laserschreibpunkt mit einem kleineren Fokus als beim Stand der Technik bewirkt, der dann auch kleinere Mikroschrifipunkte ermöglicht.

Anhand der beigefügten Zeichnungen soll die Erfindung nachfolgend näher erläutert werden.

Figur 1    zeigt eine Laserbeschriftungsanlage zur Erzeugung der Laser-Mikroschrift auf Kunststoffkarten,
Figur 2    zeigt das Strahlprofil des auf die Kunststorfkarte fokussierten Laserstrahls,
Figur 3    zeigt eine Draufsicht auf eine Kunststoffkarte mit Laser-Mikroschrift
Figur 4    zeigt die Mikroschrift in vergrößerter, lesbarer Form,
Figur 5    zeigt eine hochauflösende Darstellung eines Zeichens der Mikroschrift.

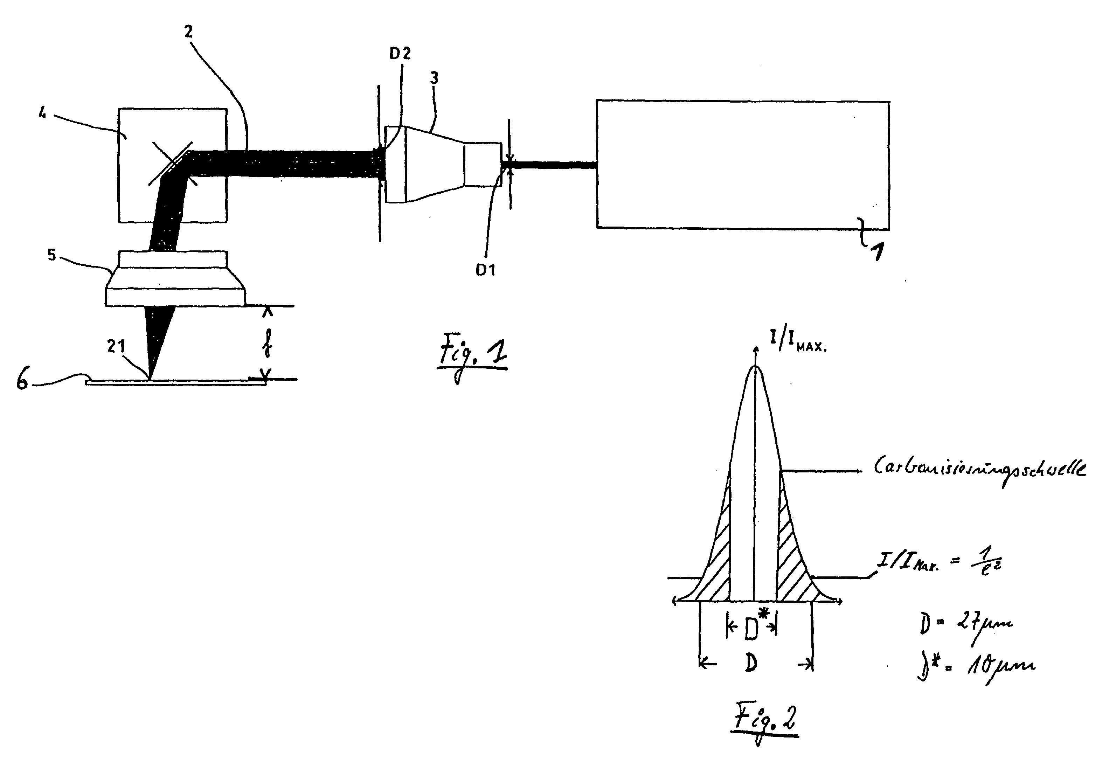

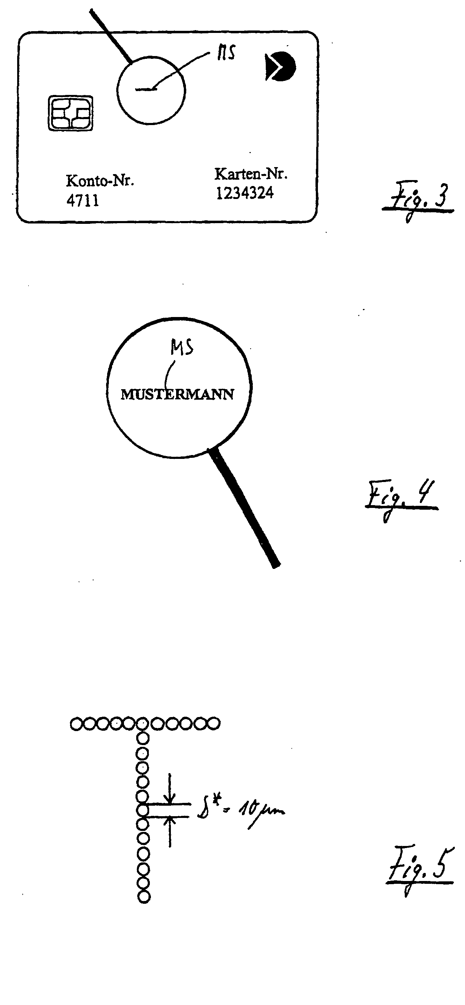

Figur 1 zeigt eine Laserbeschriftungsanlage zur Erzeugung der Laser-Mikroschrift (MS) auf Kunststoffkarten. Es wird eine Laserstrahlung (2) mit einem nahezu Gaußförmigen-Strahlprofil (siehe Figur 2) verwendet, der mit einem Strahldurchmesser ($D_1$) aus einem Laser (1) als Strahlquelle austritt. Ein Laserstrahl (2) mit einem Gaußförmigen-Strahlprofil läßt sich besonders gut fokussieren. Vor der Fokussierung wird der Laserstrahl (2) vor der Zweikoordinaten-Strahlablenkvorrichtung (4) über ein erstes optisches Mittel (3) zur nachfolgend besseren Fokussierung aufgeweitet, wobei der Durchmesser des Laserstrahls (2) nach der Aufweitung gleich ($D_2$) ist (D2 > D1). Als optisches Mittel zur Aufweitung des Laserstrahls (2) wird eine Linse oder ein Linsensystem verwendet. Der aufgeweitete Laserstrahl (2) gelangt dann über die Zweikoordinaten-Strahlablenkvorrichtung (4) und über ein zweites optisches Mittel (5) auf den Datenträger (6). Das zweite optische Mittel (5) fokussiert dabei den aufgeweiteten Laserstrahl auf die Oberfläche des Datenträgers (6) und erzeugt somit einen LaserbeschriRungspunkt (21) mit einem Durchmesser D ($D<D_1<D_2$). Als optisches Mittel (5) zur Fokussierung des Laserstrahls (2) wird ein Planfeldobjektiv mit einer Brennweite $f$ verwendet.

Vorzugsweise wird als Strahlquelle ein Nd-YAG-Laser (1) verwendet, dessen Wellenlänge gegenüber der Basiswellenlänge von 1064 nm über einen sogenannten Frequenzvervielfacher halbiert ist Es wird somit ein Laserstrahl mit einer Wellenlänge von 532 nm verwendet Es ist jedoch auch vorgesehen, einen ein Nd-YAG-Laser (1) zu verwenden, dessen Wellenlänge gegenüber der Basiswellenlänge von 1064 nm über einen Frequenzvervielfacher gedrittelt ist. In diesem Fall erfolgt die Laser-Mikroschrift mit einer Wellenlänge von 355 nm. Die hierfür benötigten Frequenzvervielfacher sind dem Fachmann bekannt.

In jedem Fall ist das Material des Datenträgers (6) erfindungsgemäß auf die verwendete, gegenüber der Basiswellenlänge reduzierte Wellenlänge abgestimmt, d.h. es muß ein Datenträgermaterial gewählt werden, das unter Laserbestrahlung mit .einer Wellenlänge kleiner als 1064 nm, vorzugsweise 532 nm, ab einer bestimmten Schwellintensität eine Änderung der optischen Eigenschaft durch Materialveränderung aufweist. Falls das Datenträgermaterial an sich diese Eigenschaft nicht erfüllt, werden diesem bestimmte Laseradditive zugesetzt.

Figur 3 zeigt eine Draufsicht auf einen als Chipkarte ausgebildeten Datenträger (6), auf dem Laser-Mikroschrift (MS) aufgebracht wurde. In Figur 4 ist die Laser-Mikroschrift (MS) vergrößert unter der Lupe dargestellt In Figur 5 ist eine hochauflösende Darstellung eines Zeichens der Mikroschrift dargestellt

Bei Verwendung eines Laserstrahls (2) mit einer Wellenlänge von. 532 nm und Gaußförmigem Strahlprofil, der mit einem Durchmesser ($D_1$) von 0,4 mm aus dem Laser (1) austritt und dann auf einen Durchmesser ($D_2$) von 8 mm aufgeweitet wird (Aufweitungsfaktor 20), läßt sich bei Verwendung eines Planfeldobjektiv mit einer Brennweite (f) von 160 mm ein Fokus (Laserschreibpunkt) mit einem $1/e^2$-Durchmesser von ca. 25 µm erzielen., Bei geeigneter Wahl des Datenträgermaterials und /oder der darin eingebetteten Additive können Mikroschriftpunkte mit einem effektiven Durchmesser (D*) von 10 µm und kleiner erzielt werden, da der Durchmesser der Laser-Mikroschriftpunkte dann dem Durchmesser der Intensitätsverteilung im Fokus, die über der Materialveränderungsschwelle liegt, entspricht.

Kunststoffkarten im Sinne der Erfindung sind Ausweiskarten, Bankarten, Kreditkarten oder Ausweisdokumente aller Art aus Kunststoff

**Patentansprüche**

1. Verfahren zur Erzeugung von Mikroschrift (MS) auf Datenträgem, insbesondere Kunststoffkarten (6) mittels Laserstrahlung, wobei

   - die Mikroschrift (MS) in Form von Änderungen der optischen Eigenschaften des Datenträgermaterials aufgrund irreversibler, durch den Laserstrahl (2) bewirkter Materialveränderung sichtbar wird,
   - der Laserstrahl über eine Zweikoordinaten-Strahlablenkvorrichtung (4) auf den zu beschriftenden Datenträger (6) gerichtet wird,
   - die Mikrobeschriftung (MS) durch den Laserstrahl (2) im Vektorverfahren und/oder Rasterverfahren erfolgt,
   - der Laserstrahl (2) ein nahezu Gaußförmigen-Strahlprofll aufweist,
   - der Laserstrahl (2) vor der Zweikoordinaten-Strahlablenkvorrichtung (4) über mindestens ein erstes optische Mittel (3) für eine nachfolgend bessere Fokussierung aufgeweitet wird,
   - der Laserstrahl (2) hinter der Zweikoordinaten-Strahlablenkvorrichtung (4) über mindestens ein zweites optische Mittel (5) auf den Datenträger fokussiert wird,
   - der Laserstrahl (2) eine Wellenlänge kleiner als 1064 nm aufweist,
   - der Laserstrahl (2) vor der Fokussierung auf einen Strahldurchmesser (D2) größer als 5 mm aufgeweitet wird,
   - für den Datenträger (6) ein Material verwendet wird, das erst ab einem bestimmten Schwellwert ($I_S$) der Laserintensität durch eine Materialveränderung eine Änderung der optischen Eigenschaft erfährt, wobei dieser Schwellwert ($I_S$) größer ist als die Intensität ($I_{MAX}/e^2$) des Laserstrahls bezogen auf das Gaußförmige-Strahlprofil des auf den Datenträger fokussierten Laserstrahls (21).

2. Verfahren nach Anspruch 1, **dadurch gekennzeichnet, dass** ein Nd-YAG-Laser als Strahlquelle für den Laserstrahl (2) verwendet wird, dessen Ausgangswellenlänge über geeignete optische Mittel, vorzugsweise einen Frequenzvervielfacher, gegenüber der Basiswellenlänge von 1064 nm halbiert (532nm) oder gedrittelt (355nm) ist.

3. Verfahren nach einem der vorstehenden Ansprüche, **dadurch gekennzeichnet, daß** der Laserstrahl (2) vor der Zweikoordinaten-Strahlablenkvorrichtung (4) über eine Linse oder ein Linsensystem (3) aufgeweitet wird.

4. Verfahren nach einem der vorstehenden Ansprüche, **dadurch gekennzeichnet, daß** der Laserstrahl (2) nach der Zweikoordinaten-Strahlablenkvorrichtung (4) über ein Planfeldobjektiv (5) auf den Datenträger fokussiert wird.

**Claims**

1. Method for producing microwriting (MS) on data carriers, in particular plastic cards (6) by means of laser radiation, wherein

   - the microwriting (MS) becomes visible in the form of changes to the optical characteristics of the data carrier material as a result of an irreversible material change caused by the laser beam (2),
   - the laser beam is directed by means of a two-coordinate beam deflection device (4) onto the data carrier (6) to be inscribed,
   - the microwriting (MS) by the laser beam (2) is carried out using the vector method and/or raster method,
   - the laser beam (2) has an almost Gauss-shaped beam profile,
   - for subsequent better focusing, the laser beam (2) is expanded by at least one first optical means (3) in front of the two-coordinate beam deflection device (4),
   - the laser beam (2) behind the two-coordinate beam deflection device (4) is focused onto the data carrier by at least one second optical means (5),
   - the laser beam (2) has a wavelength of less than 1064 nm,
   - before focusing, the laser beam (2) is expanded to a beam diameter (D2) greater than 5 mm,
   - a material is used for the data carrier (6) which only experiences a change in its optical characteristics as a result of a material change from a given threshold value (Is) of laser intensity, said threshold value (Is) being greater than the intensity ($I_{MAX}/e^2$) of the laser beam relative to the Gauss-shaped beam profile of the laser beam (21) focused onto the data carrier.

2. Method according to Claim 1, **characterized in that** an Nd-YAG laser is used as the beam source for the laser beam (2), the output wavelength of which is halved (532 nm) or divided by three (355 nm) in relation to the base wavelength of 1064 nm using suitable optical means, preferably a frequency multiplier.

**3.** Method according to one of the preceding claims, **characterized in that** the laser beam (2) is expanded before the two-coordinate beam deflection device (4) by means of a lens or a lens system (3).

**4.** Method according to one of the preceding claims, **characterized in that** the laser beam (2) is focused onto the data carrier after the two-coordinate beam deflection device (4) by means of a flat-field lens (5).

## Revendications

**1.** Procédé pour la génération de micro-écriture (MS) sur des supports de données, notamment des cartes en matière plastique (5), à l'aide d'un faisceau laser,

- la micro-écriture (MS) étant visible en forme de modifications des propriétés optiques de la matière du porteur de données, par modification irréversible de la matière, provoquée par le faisceau laser (2),
- le faisceau laser étant dirigé sur ledit porteur de données (6) à pourvoir d'inscription, par l'intermédiaire d'un dispositif de déflection de faisceau à deux coordonnées (4),
- la micro-inscription (MS) étant effectuée par le faisceau laser (2) selon le procédé vectoriel et / ou le procédé de grille,
- le faisceau laser (2) présentant un profil de rayonnement gaussien,
- le faisceau laser (2) étant élargi, en amont du dispositif de déflection de faisceau à deux coordonnées (4), à l'aide d'au moins un premier auxiliaire optique (3), en vue d'obtenir une meilleure focalisation ultérieure,
- le faisceau laser (2) étant focalisé sur le support de données, en aval du dispositif de déflection de faisceau à deux coordonnées (4), par l'intermédiaire d'au moins un deuxième auxiliaire optique (5),
- le faisceau laser (2) présentant une longueur d'onde inférieure à 1064 nm,
- le faisceau laser (2) étant élargi., avant la focalisation, à un diamètre de rayon (D2) supérieur à 5 mm,
- la matière utilisée pour la fabrication du support de données (6) étant une matière ne subissant une modification de la propriété optique qu'à partir d'une certaine valeur de seuil ($I_s$) de l'intensité du laser, par modification de matière, ladite valeur de seuil ($I_s$) étant supérieure à l'intensité ($I_{max}/e^2$) du faisceau laser en rapport avec le profil de rayonnement gaussien dudit faisceau laser (21) focalisé sur le support de données.

**2.** Procédé selon la revendication 1, **caractérisé en ce que**, comme source de rayonnement pour le faisceau laser (2), on utilise un laser Nd-GYA dont la longueur d'ondes de sortie est réduite à la moitié (532 nm) ou au tiers (355 nm) de la longueur d'ondes de base de 1064 nm, à l'aide d'un auxiliaire optique approprié, préférentiellement d'un générateur d'harmoniques.

**3.** Procédé selon l'une des revendications précédentes, **caractérisé en ce que** le faisceau laser (2) est élargi, en amont du dispositif de déflection du faisceau (4), par l'intermédiaire d'une lentille ou d'un système lenticulaire (3).

**4.** Procédé selon l'une des revendications précédentes, **caractérisé en ce que** le faisceau laser (2) est focalisé, en aval du dispositif de déflection de faisceau à deux coordonnées (4), sur le support de données par l'intermédiaire d'un objectif à champ plan.

EP 1 224 605 B1

*Fig. 1*

$I/I_{MAX.}$

Carbonisierungschwelle

$I/I_{Kar.} = \frac{1}{e^2}$

$D = 27\mu m$

$D^* = 10\mu m$

$D^*$

$D$

*Fig. 2*

Fig. 3

Fig. 4

Fig. 5